# DEMANDE DE BREVET EUROPEEN

(11) **EP 2 908 279 A1**
(43) Date de publication de la demande: **19.08.2015**
(21) Numéro de dépôt: 14305225.6
(22) Date de dépôt: 18.02.2014
(51) Int. Cl.: G06Q 20/32

(54) **Procédé et système de transaction électronique via un accessoire portable**

(71) Demandeur: Gemalto SA, 92190 Meudon (FR)
(72) Inventeur: Silvestre, Thierry, 13705 La Ciotat (FR); Rade, Daniel, 13705 La Ciotat (FR); Balocco, Sébastien, 13705 La Ciotat (FR)

(57) **Abrégé**

L'invention porte sur un procédé pour réaliser une transaction électronique entre un appareil principal de communication (1, 10) et un terminal de transaction (3),
caractérisé en ce que :
- on fournit un accessoire portable (2, 12) intelligent apte à relayer la transaction ou à représenter ledit appareil principal vis à vis d'un terminal de transaction,
- on réalise la transaction en présentant ledit accessoire au terminal de transaction à la place de l'appareil principal.

L'invention concerne également le système correspondant.

## Description

### Domaine de l'invention

L'invention concerne en général un procédé pour réaliser une transaction électronique entre un appareil principal de communication ou un accessoire et un terminal de transaction.

En particulier, elle concerne le domaine des procédés de communication avec un appareil de communication doté d'un moyen antivol.

### Art Antérieur

Des transactions électroniques au sens large peuvent s'effectuer par des dispositifs de communication radiofréquence tels que carte bancaire radiofréquence, étiquette électronique (RFID), badge électronique, passeport électronique, accessoire communiquant.

Il existe aujourd'hui la possibilité d'effectuer une transaction électronique radiofréquence pour un paiement, identification, accès ou autre par le biais d'un téléphone portable, (désigné par la suite par appareil ou dispositif) équipé d'une fonction radiofréquence NFC (Near field communication selon la terminologie Anglo-Saxonne).

Ces transactions requièrent d'exposer généralement l'appareil radiofréquence à l'extérieur et ce dernier risque d'être dérobé au cours de la transaction. En outre, il peut être contraignant d'avoir à sortir l'appareil de son logement, sac, portefeuille, vêtement.

On connait l'association de montre dotée de fonction NFC (Near field communication) à des téléphones portables. Les montrent peuvent être appariées par NFC à un téléphone et ensuite des communications téléphoniques reçues par le téléphone peuvent être renvoyées par lui par Bluetooth sur la montre. Il devient inutile de sortir le téléphone de la poche puisque la communication téléphonique peut être prise au niveau de la montre. La fonction NFC de la montre sert uniquement à effectuer un appairage avec le téléphone dans le but ensuite de communiquer en Bluetooth™ entre eux pour relayer une communication téléphonique en cours. Cette montre réalise uniquement des échanges de communication de données téléphoniques, voix, images, SMS avec le téléphone.

Les fonctionnalités de la montre sont relativement limitées et dépendantes du téléphone pour son fonctionnement.

### Problème technique

L'invention a donc pour but de remédier à au moins un des inconvénients de l'art antérieur. En particulier, l'invention vise principalement à proposer une solution pratique pour réaliser une transaction électronique radiofréquence sans risque de vol du dispositif radiofréquence.

Par ailleurs, il peut y avoir un besoin pour contrôler ou limiter la mise en oeuvre des applications de transaction qui peuvent être mal adaptées ou surdimensionnées pour un utilisateur telles qu'une application bancaire d'adulte avec un montant autorisé par semaine élevée par rapport à une utilisation par un enfant avec un montant autorisé moins élevé. Par exemple, on peut vouloir augmenter la sécurité des transactions ou empêcher leur réalisation en cas de vol d'un appareil apte à réaliser des transactions électroniques.

### Résumé de l'invention

Le principe de l'invention repose sur l'utilisation d'un accessoire radiofréquence dissimulé discrètement dans un objet portable courant tel qu'une montre, une bague, un bracelet ; Cet objet est apte à relayer ou à représenter le dispositif radiofréquence au moins pour une transaction ou une période de temps ou d'une certaine manière. L'accessoire est de préférence initialisé par l'appareil ou dispositif principal de transaction portable.

De préférence, cet accessoire peut être initialisé, personnaliser ou paramétrer à l'aide du dispositif principal contenant une application de transaction.

A cet effet, l'invention a pour objet un procédé pour réaliser une transaction électronique entre un dispositif principal ou accessoire de communication et un terminal de transaction; Le procédé est caractérise en ce qu'il comprend les étapes suivantes:
- fourniture d'un accessoire portable intelligent apte à relayer la transaction ou à représenter ledit appareil principal vis à vis d'un terminal de transaction,
- et réalisation de la transaction en présentant ledit accessoire au terminal de transaction à la place de l'appareil principal.

Ainsi, l'invention permet d'éviter d'avoir à présenter l'appareil à un terminal de transaction et d'exposer l'appareil principal à des regards de tiers et à des risques de vol.

Selon d'autres caractéristiques / ou avantages :
- Le procédé comprend selon un mode de mise en oeuvre une étape d'installation d'une application bancaire (AB) dans l'appareil principal, l'accessoire relayant la transaction de manière transparente entre l'appareil principal et le terminal de transaction ;
- Le procédé comprend de préférence une étape d'initialisation (ou d'initiation) de l'accessoire à l'aide de l'appareil principal ou d'appairage de l'accessoire à l'appareil principal ;
- L'étape d'initialisation (ou d'initiation) peut comporter une phase de transfert / clonage d'informations choisies parmi :
   - des informations (IP) d'une application de transaction électronique dans l'accessoire et/ou
   - des informations comprenant un code PIN de l'appareil à l'accessoire ;
- L'étape d'initialisation / initiation peut comporter une phase de lancement d'une application de pilotage de l'accessoire par l'appareil principal ;
- L'étape d'initialisation / initiation peut prévoir de capter via l'appareil principal un code PIN ou équivalent nécessaire à une transaction future et de le transmettre à l'accessoire en toute sécurité pour permettre une transaction future ou en cours ;
- L'accessoire peut disposer de moyens de communication (FED) configurés pour relayer des données et instructions de commande entre l'appareil principal et le terminal ;
- La transaction peut être autorisée par action volontaire de l'utilisateur sur un interrupteur ou authentification biométrique par l'accessoire ; L'accessoire permettant ainsi d'améliorer la sécurité de la transaction.
- Le procédé comprend une application logicielle de contrôle (AC) de la mise en oeuvre d'une application logicielle de transaction (AB) notamment quant à une zone géographique, une période temporelle ou la manière de réaliser la transaction. Grâce à l'invention, il est aussi possible de contrôler ou compléter notamment au niveau de la sécurité, la mise en oeuvre de l'application de transaction qui peut être standard et non modifiable

L'invention vise également à proposer un système pour réaliser une transaction électronique entre un appareil principal ou accessoire de communication et un terminal de transaction, caractérisé en ce qu'il comprend :
- un accessoire portable intelligent apte à relayer la transaction ou à représenter ledit appareil principal vis à vis d'un terminal de transaction,
- des moyens de communication et d'initialisation / initiation de l'appareil principal pour initialiser l'accessoire portable et des moyens de communication de l'accessoire avec un terminal e transaction pour réaliser la transaction électronique à la place de l'appareil principal.

### Brève description des figures :

D'autres particularités et avantages de l'invention apparaitront à la lecture de la description suivante faite à titre d'exemple illustratif et non limitatif, en référence aux Figures annexées qui représentent :
- La Figure 1 illustre un schéma de transaction électronique selon un premier mode de mise en oeuvre du procédé de l'invention entre un appareil principal et un terminal de transaction via un dispositif portable relais;
- La Figure 2 illustre un schéma de transaction électronique selon un second mode de mise en oeuvre du procédé de l'invention mettant en oeuvre un accessoire portable;
- Les Figures 3 et 4 illustrent un accessoire intelligent portable sous forme de montre respectivement en position ouverte et fermée ;
- Les Figure 5 et 6 illustrent un accessoire intelligent portable sous forme de bracelet respectivement en position ouverte et fermée ;
- Les Figures 7 et 8 illustrent un accessoire intelligent portable sous forme de bague respectivement en position déverrouillée et verrouillée ou déposée / portée;

### Description

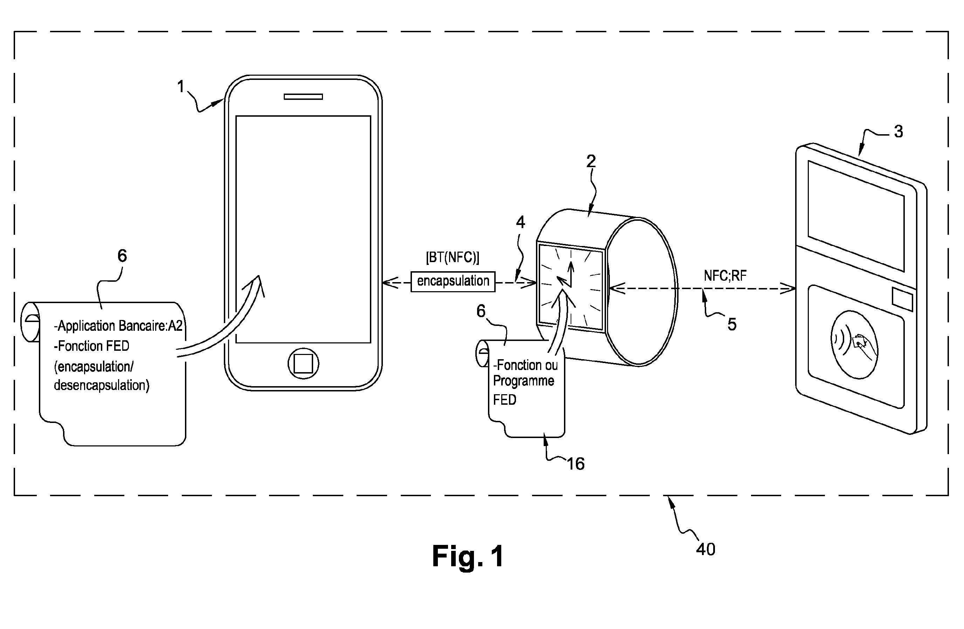

A la figure 1, est illustré un premier mode de mise en oeuvre du procédé de l'invention pour réaliser une transaction électronique entre un appareil principal de communication 1 et un terminal de transaction 3. Par transaction, on entend tout échange (données, instructions, signaux, messages...) unilatéral ou bilatéral entre deux objets de communication. Ces échanges peuvent être à des fins diverses telles que transactions bancaires, identité, authentification, accès, débit, crédit...

Un système 40 pour réaliser une transaction est composé d'un appareil principal 1, d'un accessoire 2 et d'un terminal 3. L'appareil principal 1 est ici un téléphone portable intelligent mais peut être tout autre objet, dispositif intelligent tel un assistant personnel (PDA) un ordinateur portable (LP), ou autre appareil principal de communication portable. L'appareil dans l'exemple dispose notamment de moyen de traitement µC, de moyens de mémorisation (volatile et non volatile), au moins une interface de communication avec un accessoire associé (décrit ci-dessous) et au moins une interface de communication avec le terminal de transaction 3 qui peut être la même que la précédente. Cette interface de communication peut être de tout type technologique tel que Bluetooth (BT, wifi, NFC, Radiofréquence RF, UHF, optique, infrarouge...) pour établir une communication 4 avec l'accessoire.

De préférence, la communication 4 entre l'appareil principal de communication 1 et l'accessoire relais est de type Bluetooth™ (désigné par la suite aussi BT), tandis que celle 5 entre l'accessoire relais et l'appareil de transaction est de type radiofréquence NFC, RF notamment selon la norme ISO 14443.

L'appareil principal de communication 1 comprend de préférence des moyens d'interface homme / machine (IHM) avec un utilisateur tels que clavier 7, afficheur 8. Dans l'exemple, l'afficheur et clavier sont tactiles. L'appareil 1 comprend également au moins une application de transaction 6 dans une mémoire interne (SE) ou une mémoire de masse externe telle une carte à mémoire de masse (Mini SIM, SD, micro SD) ou une clé USB de préférence sécurisée. Dans l'exemple, l'application est dans une carte SIM qui est reliée de manière connue par à un contrôleur NFC munie d'une interface radiofréquence.

En l'occurrence dans l'exemple, l'application logicielle (AB) de transaction 6 est de type bancaire, financière, ou de paiement. Cette application de transaction permet d'effectuer une transaction électronique avec le terminal 3 de transaction tel un terminal bancaire (ATM, POS), une borne d'accès, un distributeur de biens de consommation...

Dans l'exemple, il s'agit d'un terminal de paiement portable lecteur radiofréquence de proximité notamment de cartes sans-contact ou de téléphone portable doté d'une fonction NFC et/ou d'un mode émulation carte sans-contact. Alternativement, le téléphone ou appareil peut-être aussi dépourvu de certaines capacités notamment radiofréquence (NFC), qui sont incluses de manière complémentaires dans l'accessoires apportant ainsi un intérêt supplémentaire à l'accessoire 2.

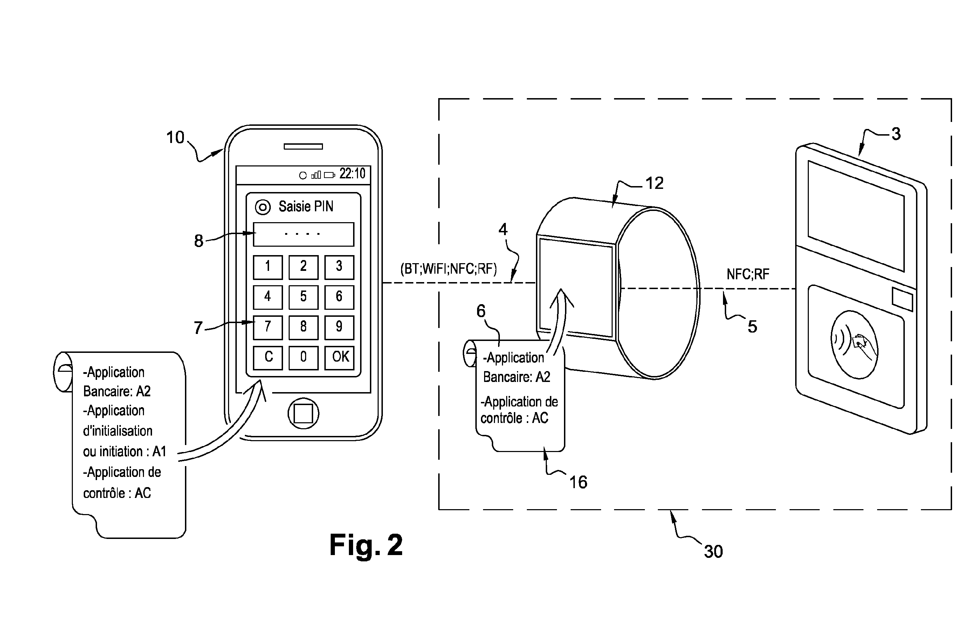

Selon un mode de mise en oeuvre, l'invention comprend une étape de fourniture d'un accessoire portable intelligent 2. Ce dernier, selon le mode illustré à la figure 1, est apte à relayer la transaction ou selon le mode illustré à la figure 2, à représenter ledit appareil principal vis à vis d'un terminal de transaction.

A cet effet, l'accessoire 2 peut comprendre des moyens de communication et d'interface apte à transposer une communication Bluetooth en communication radiofréquence. Alternativement, l'accessoire peut extraire des données ou instructions reçues de l'appareil principal sous forme de trames radiofréquences encapsulées dans un autre protocole de communication tel un protocole Bluetooth. Dans l'exemple (figure 1), l'accessoire et l'appareil sont configurés pour encapsuler et dé encapsuler des trames radiofréquences dans des messages de type Bluetooth notamment quand ils communiquent l'un avec l'autre. Ainsi, les données ou instructions émises par l'appareil principal 1 sous forme de trames radiofréquences sont reçues par l'accessoire en étant encapsulées notamment par le protocole Bluetooth et inversement pour celles émises par l'accessoire vers l'appareil principal.

Les données ou instructions reçues par l'accessoire peuvent être décodées ou dés encapsulées par l'accessoire avant d'être renvoyées par l'accessoire ou alternativement placé provisoirement dans une mémoire de l'accessoire pour être lus par le terminal de transaction. L'accessoire peut soit réémettre lui-même les données et/ou instructions de manière active dès qu'elles sont disponibles, soit permettre passivement une lecture par le terminal de transaction agissant comme lecteur.

Les données et/ou instructions provenant de l'appareil principal sont reçu et extrait dans l'accessoire puis lu ou transmis par une communication 5 sous forme de trames radiofréquences au terminal de transaction 3.

Ainsi, selon une autre caractéristique ou variante de mise en oeuvre, le procédé prévoit que l'accessoire dispose de moyens de communication configurés pour relayer des données et instructions de commande entre l'appareil principal et le terminal.

Avantageusement, l'accessoire 2 dans l'exemple, est une montre électronique comprenant des moyens d'interface d'une part avec le terminal de transaction 3 et d'autre part avec l'appareil principal 1 comme indiqué précédemment. La montre comprend un bracelet pour la porter au poignet. L'accessoire peut comprendre des moyens de mémorisation tampon pour mémoriser au moins temporairement des données et/ou instructions à échanger entre le terminal de transaction et l'appareil principal. Alternativement, les données et instructions peuvent ne pas être stockées mais relayées au fur et à mesure qu'elles lui parviennent. La montre peut comprendre un boîtier de montre avec un afficheur digital ou non, de préférence sensitif pour interagir avec l'utilisateur comme sur l'appareil 1.

Alternativement, la communication entre l'appareil principal et l'accessoire peut être du type électrique à travers le corps ou à la surface de la peau. Des moyens capacitifs peuvent être présents dans chacun des appareils et accessoire pour collecter les échanges de signaux avant d'extraire des informations (données, instructions) pour traitement. Alternativement aussi, les échanges entre l'accessoire et le terminal peuvent être capacitif. L'accessoire peut être configuré pour simplement relayer un signal capacitif, électrique ou autre. Le cas échéant, l'accessoire peut comprendre des moyens d'amplification du signal reçu avec ou sans source d'énergie, batterie embarquée.

Selon une autre caractéristique ou variante de mise en oeuvre, le procédé prévoit de mettre oeuvre une étape d'installation d'une application logicielle notamment bancaire dans l'appareil principal. L'accessoire relaye des échanges de la transaction de manière transparente entre l'appareil principal contenant l'application bancaire (ou tout autre application de transaction notamment de contrôle d'accès, de paiement...) et le terminal de transaction.

Ainsi, un utilisateur peut porter un accessoire 2 de manière discrète sous forme de montre et disposer son appareil principal 1 tel que son téléphone, dans sa poche ou son sac. Au cours d'une transaction, l'utilisateur approche son accessoire proche du lecteur terminal de transaction. Le lecteur émet un signal d'interrogation / lecture à destination de l'appareil principal sous forme de trames radiofréquences ; l'accessoire peut être alimenté par l'énergie du champ radiofréquence du lecteur récupérée. Cette énergie peut servir à effectuer un traitement des données et instruction (par exemple instruction de lecture d'un droit, ou identifiant, ou commande de décompte de droits, d'unités de valeur, financières ou autre.

Dans l'exemple, la montre comprend une antenne radiofréquence qui capte le champ radiofréquence véhiculant l'énergie et les données et/ou instructions du lecteur radiofréquence. Cette énergie est utilisée pour extraire les trames de données et/ou instructions radiofréquences et pour effectuer un traitement d'encapsulation et d'émission de ces trames selon le protocole Bluetooth à destination de l'appareil principal 1.

L'appareil principal 1 reçoit les signaux Bluetooth de l'accessoire puis en extrait les trames radiofréquences pour les transmettre et traitement par les moyens d'interface radiofréquence NFC (mis notamment en mode d'émulation carte sans contact). Les moyens d'interface radiofréquence renvoient une information (données, instruction) demandée en mettant en oeuvre l'application de transaction préalablement chargée. Cette information est à son tour renvoyée sous forme de trames radiofréquences encapsulées selon le protocole Bluetooth à destination de l'accessoire. L'accessoire 2 reçoit le signal Bluetooth, en extrait les trames radiofréquences et les données ou instructions correspondantes et les transmet au lecteur notamment en modulant le champ radiofréquence de lecture du lecteur.

Selon une autre caractéristique ou variante de mise en oeuvre, le procédé prévoit de préférence une étape d'initialisation (ou initiation) de l'accessoire à l'aide de l'appareil principal ou d'appairage de l'accessoire à l'appareil principal. L'appareil comprend dans l'exemple une application d'initialisation et/ou d'appairage (A1).

Dans l'exemple, au préalable, on crée un appairage notamment Bluetooth ou wifi entre l'appareil principal et l'accessoire. L'avantage est de ne permettre un relais de données entre deux appareils que s'ils sont à proximité l'un de l'autre et appariés ensemble. Ainsi en cas de vol de l'accessoire, il est impossible de s'en servir seul sans l'appareil principal.

L'avantage de l'invention est de permettre une réalisation d'une transaction en présentant l'accessoire au terminal de transaction à la place de l'appareil principal. Ce dernier peut être dissimulé ou non exposé en étant porté dans un vêtement ou sacoche, sac...

A la figure 2, on décrit selon un second mode de réalisation, un système de transaction 30 comprenant un accessoire 12 et un terminal de transaction 3. Selon un second mode correspondant de mise en oeuvre, l'accessoire de transaction électronique 12 est apte à représenter un appareil principal 10 de communication vis à vis d'un terminal de transaction 10. A cet effet, l'accessoire a été configuré au préalable et il a été procédé dans le téléphone à une installation d'une application spécifique de gestion d'accessoire, appairage...; dans ce cas, le téléphone peut quasiment servir que d'écran déporté de l'accessoire. Les mêmes numéros de références représentent les mêmes éléments ou similaires par rapport à la figure précédente. Par ailleurs les éléments 1, 2 peuvent être identiques ou similaire aux éléments 10, 12 en ayant certaines fonctions communes.

L'accessoire 12 peut comprendre comme à la figure 1, des mêmes moyens matériels électroniques notamment de communication et/ou d'interface avec l'appareil principal 10 et avec le terminal de transaction 3. Il peut comprendre une interface homme /machine (clavier 7, écran 8). Toutefois, à la différence du premier mode de réalisation, le second mode peut s'affranchir de la présence de l'appareil principal au cours d'une transaction avec le terminal de transaction.

Comme autre différence avec le premier mode, dans ce second mode, l'accessoire comprend au moins une application de transaction (par exemple A2) visée au premier mode et contenue dans des moyens de stockage identiques ou similaires notamment dans une mémoire interne (SE2) ou une mémoire de masse externe telle une carte à mémoire de masse (Mini SIM, SD, micro SD) ou une clé USB de préférence sécurisée. Alternativement, l'accessoire lui-même peut réaliser la fonction d'une clé USB comprenant une ou plusieurs interfaces de communication sans contact. L'application de transaction dans l'accessoire permet d'effectuer directement (sans présence ou intervention de l'appareil principal lors de la transaction) une transaction électronique avec un terminal 3 de transaction tel un terminal bancaire (ATM, POS), une borne d'accès, un distributeur de biens de consommation...

Selon une autre caractéristique ou variante de mise en oeuvre du second mode, le procédé prévoit également de préférence une étape d'initialisation (ou d'initiation) de l'accessoire à l'aide notamment de l'appareil principal ou d'appairage de l'accessoire (notamment à l'appareil principal) de manière à ce que l'appareil principal puisse être représenté par l'accessoire. Le terme initiation peut aussi comprendre la notion de configuration, de formation, de transfert de moyens, d'informations, d'apprentissage, formation permettant à l'accessoire de réaliser une transaction à la place de l'appareil principal.

L'appareil comprend donc également de préférence une application d'initialisation (initiation) et/ou d'appairage (A1) d'un accessoire associé (12). Vu du terminal de transaction, l'accessoire comprend touts les attributs de l'appareil requis pour réaliser la transaction comme si c'était l'appareil de transaction lui-même (droits, protocole, clés, procédures, identification, authentification ou tout autre élément matériel ou logiciel...)

A cet effet, selon une caractéristique ou variante de mise en oeuvre de ce second mode, le procédé prévoit que l'étape d'initialisation ci-dessus comporte une phase de transfert ou de clonage d'informations (données, fonctions, programme...) choisies parmi :
- des informations d'une application de transaction électronique (par ex. A2) dans l'accessoire et/ou
- des informations (IP) comprenant un code PIN de l'appareil principal à l'accessoire et/ou des moyens de gestion de la saisie d'un code PIN par l'utilisateur notamment au moment de la transaction.

Les informations relatives à l'application de transaction peuvent comprendre notamment, l'application logicielle de transaction électronique elle-même telle qu'elle est présente dans le terminal de transaction (programme, données personnelles, identifiant, compte bancaire, adresse, référence de commerçant, montant découvert autorisé, crédit, débit...). Les informations peuvent comprendre le code PIN ou autre élément d'authentification (empreinte, élément biométrique numérisé) de manière permanente ou provisoire comme décrit ci-dessous.

Ainsi, grâce à l'invention, on peut doter l'accessoire des informations ou données nécessaires pour réaliser au moins une transaction. Si l'accessoire est doté des applications bancaires personnalisées, la copie du PIN dans l'accessoire peut être est suffisante. Ces informations peuvent provenir de l'appareil principal personnel ou autre appareil de personnalisation notamment en libre service (borne interactive...) apte à transférer des informations, droits, abonnement, personnalisation.

Par exemple, un utilisateur peut programmer l'accessoire la veille à l'aide de l'appareil principal de manière à ce que l'accessoire représente l'appareil de transaction pour un accès au métro dans la limite d'un aller et retour et le cas échéant dans certaines plages horaires. (Par exemple, l'application de paiement de métro ou autre moyen transport peut être dans l'accessoire, le PIN peut être copié du téléphone vers l'accessoire, et effacé lorsque l'accessoire est ôté de la poignée/main ou à la fin de la journée ou autre période de temps grâce à une horloge interne.

L'utilisateur peut, alternativement, programmer l'accessoire pour permettre un achat d'un montant maximal prédéterminé.

Alternativement, la programmation peut permettre de donner le code PIN une seule fois et/ou d'autoriser une transaction avec code PIN dans une plage horaire ou avec certains terminaux de transaction préalablement identifiés (relatif à un organisme ou localisé à un endroit). Un GPS (global positioning system) ou équivalent peut être incorporé dans l'accessoire pour permettre la localisation et autoriser ou non une transaction en fonction des zones autorisées pour réaliser une transaction. Ainsi, l'utilisateur a un contrôle géographique sur les transactions en cas de vol de son accessoire.

L'utilisateur peut ainsi s'affranchir d'exposer son appareil principal tel un téléphone portable à des regards indiscrets. L'appareil peut demeurer au domicile ou dans une poche ou sac en étant actif ou non. L'invention permet ainsi d'éviter un vol de l'appareil principal quand celui-ci est exposé au cours d'une transaction. L'utilisateur peut choisir la nécessité d'avoir l'appareil 1 et l'accessoire 2 proches ou non pour effectuer des transactions.

Conformément à une autre caractéristique ou variante de mise en oeuvre, le procédé prévoit qu'au moins l'une des étapes d'initialisation / initiation ou d'appairage ci-dessus comporte une phase de lancement d'une application de pilotage de l'accessoire par l'appareil principal. Ce lancement peut être effectué, par exemple, notamment par sélection de l'utilisateur dans un menu affiché par l'appareil principal. Des paramètres peuvent être proposés par le menu comme montant autorisé, nombre de transaction avec authentification par PIN et/ou avec authentification biométrique.

Ainsi, l'utilisateur peut ou non à souhait, durcir ou alléger le niveau de sécurité mise en oeuvre dans ses opérations notamment financières, bancaire selon les enjeux impliqués ou dangerosité de l'endroit où s'effectue la transaction ou le doute quant à la confiance du tiers ou terminal avec lequel s'effectue la transaction électronique, ou le temps dont dispose l'utilisateur pendant la transaction.

Ainsi, l'invention permet de contrôler la mise en oeuvre de l'application de transaction (qui peut être standard et non modifiable) déportée dans l'accessoire, par l'intermédiaire d'une autre application logicielle de contrôle qui lui a été associée et paramétrée dans l'accessoire. Le contrôle peut être notamment relatif à une zone géographique, une période temporelle ou à la manière autorisée par l'utilisateur (montant maximum, niveau de sécurité, authentification, identification des terminaux de transaction autorisés, type de transaction incluant par exemple un accès à des transports, un achat alimentaire ou vestimentaire, un paiement au restaurant, à l'hôtel, à un taxi, ...) pour réaliser la transaction.

L'application logicielle de contrôle peut mettre en oeuvre un test comparatif de paramètres de localisation fournis notamment par GPS interne (reçu de l'extérieur). Le test peut comparer des paramètres de temps fournis notamment par une horloge interne ; Le test peut comparer une limite de montant de transaction autorisé (notamment programmée en interne), une identification de terminal autorisé ou prédéfinis ; Les paramètres peuvent comprendre ou définir l'objet de la transaction, un lieu ou zone géographique de la transaction, une identification de tiers contractuel intervenant dans la transaction. L'invention permet de déporter ou dupliquer des droits de transaction dans un ou plusieurs accessoires à partir d'un appareil principal. Ainsi, par exemple, un détenteur d'appareil principal ayant une application de porte monnaie électronique, peut déléguer ou transférer quotidiennement à deux enfants dotés chacun d'un accessoire un certain montant avec des affectation quant à l'utilisation, par exemple à l'un deux euros pour distributeur de boisson du collège ayant un identifiant, six euros pour un repas à la cantine du collège à et à l'autre 2 euros pour ligne de transport identifié aller et retour, 5 euros pour autre dépenses dans une zone géographique limitée à une ville et environ. On retrouve ici une fonction de l'invention pour la distribution d'unité de paiement notamment d'un parent à ses enfants, mais avec plus de sécurité par rapport au vol et contrôle notamment parental de l'usage de ces unités.

L'accessoire peut conserver une trace des transactions non autorisées et tentées par un porteur de l'accessoire pour information du détenteur de l'appareil lors d'une collecte d'information ou échange ultérieur entre l'appareil principal et un accessoire..

Le cas échéant, des paramètres de contrôle de l'application de contrôle (AC ou 16) pour la mise en oeuvre de l'application de transaction peuvent être réglés ou saisie directement sur l'accessoire. A cet effet, l'accessoire peut comprendre une interface homme /machine (clavier, écran sensitif ou non, capteur d'empreinte...)

Conformément à une autre caractéristique ou variante de mise en oeuvre applicable aux deux modes ci-dessus, le procédé prévoit que l'application de pilotage ci-dessus, peut capter via une interface (IHM) quelconque homme / machine de l'appareil principal (clavier, écran sensitif, système de reconnaissance vocale...) un code PIN ou équivalent nécessaire à une transaction future et de le transmettre à l'accessoire en toute sécurité (notamment chiffrer ou codé) pour permettre une transaction future ou en cours. Le code PIN ou équivalent peut être stocké sous formé chiffrée ou codé dans l'accessoire et avant ou au moment de la transaction être délivré sous forme décodée ou déchiffrée.

Alternativement, le terminal demande d'introduire le code PIN par l'utilisateur au cours de la transaction et le transmet à l'accessoire pour comparaison et retourner une validation au terminal bancaire.

Conformément à une autre caractéristique ou variante de mise en oeuvre applicable à tous les modes décrits, le procédé prévoit de préférence que la transaction est autorisée par action volontaire de l'utilisateur sur un interrupteur ou par authentification biométrique par l'accessoire. Comme précédemment, l'authentification peut être saisie sur le terminal de transaction qui soumet les données à l'accessoire pour validation (par exemple comme le code PIN pour une carte bancaire). Le PIN peut aussi être saisi directement sur l'accessoire, comme décrit plus haut.

L'invention peut prévoir une fonction de sécurité déportée au niveau de l'accessoire par exemple une action volontaire d'authentification biométrique (code PIN) au niveau de l'accessoire pour permettre à l'accessoire de relayer une réponse de l'appareil principal ou autre échanges conduisant à conclure une transaction avec le terminal de transaction. Cela permet d'éviter de sortir l'appareil principal pour saisir un code PIN ou s'authentifier autrement.

Une fois initialisé, programmé, personnalisé temporairement, l'appareil 10 peut être laissé à domicile pendant que l'accessoire est utilisé hors du domicile car des fonctionnalités lui ont été déportée L'accessoire peut avoir des fonctions de communications avancées comme de téléphonie cellulaire, wifi comme l'appareil principal. L'accessoire permet d'utiliser des ressources ou droits justes et nécessaires prélevés de l'appareil principal pour une période déterminée ou autres critères déterminés. L'accessoire étant en principe moins onéreux et permet une sécurité personnalisée avec un degré de finesse optimisée selon le souhait de l'utilisateur qui n'est peut être pas permise par l'appareil principal.

En fonctionnement, au cours d'une transaction, un porteur de l'accessoire préalablement programmé notamment avec l'appareil principal, se présente face au terminal de transaction. Un échange s'opère entre l'accessoire et le terminal de transaction si un test relatif à un des paramètres prédéterminé est réussi. Le contrôle peut s'effectuer soit avant de commencer une transaction, par exemple, la fonction NFC est inhibée tant que le paramètre n'est pas satisfaisant (par exemple localisation, l'heure de transaction hors d'une plage autorisée).

Le contrôle peut s'effectuer pendant la transaction : par exemple, un contrôle s'effectue après avoir reçu une demande de débit d'un certain montant, avec un identifiant du terminal. Le programme de contrôle teste le montant requis par rapport au montant autorisé et programmé dans l'accessoire et/ou compare l'identifiant du terminal à une série d'identifiants autorisés programmés dans l'accessoire.

Le contrôle peut s'effectuer aussi à la fin : par exemple, il est nécessaire de transmettre un code PIN pour valider la transaction. Le test compare dans l'accessoire le nombre de fois d'utilisation du code notamment dans la journée par rapport à un nombre autorisé programmé dans l'accessoire.

S'il est satisfait à l'un ou plusieurs des tests de contrôle ci-dessus, la transaction se poursuit.

Ainsi, selon un aspect, l'invention peut avoir l'avantage de rajouter une couche logicielle de contrôle ou des moyens matériels de contrôle dans l'appareil pour l'utilisation d'une application sans avoir à modifier l'application elle-même.

Le cas échéant, ans certains autres cas, l'application peut être modifiée directement, complétée notamment grâce à l'appareil principal si elle est prévue pour cela.

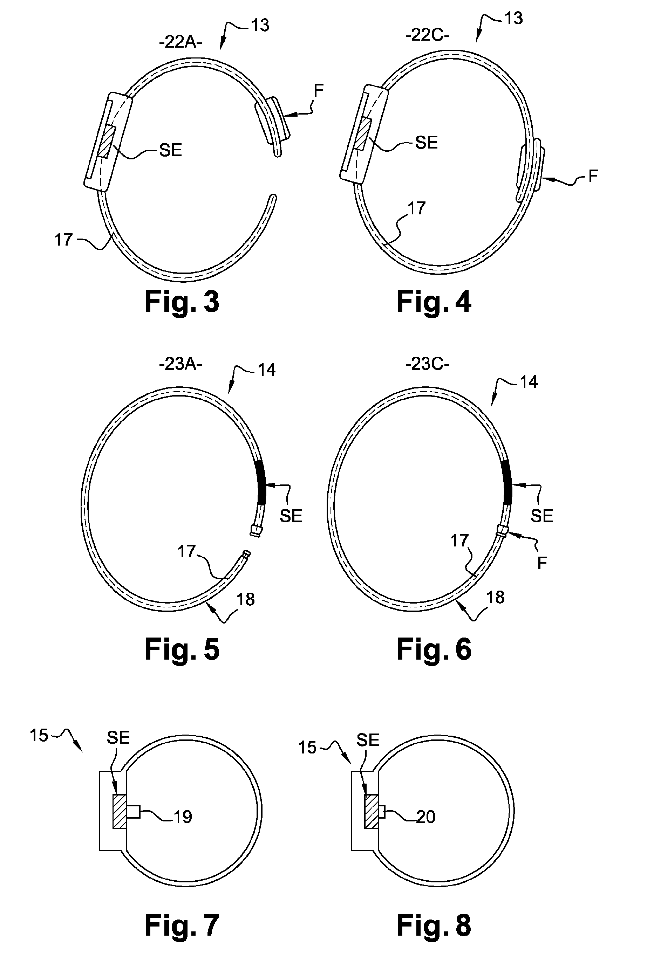

Sur les figures 3 à 8, l'accessoire est respectivement sous la forme d'une montre 13, d'un bracelet (jonc) 14 ou d'une bague 15. L'accessoire comprend un circuit SE électronique et/ou des moyens matériels comme dans les accessoires des figures précédentes ; L'accessoire peut comprendre de préférence un moyen de détection de la présence de l'utilisateur ou de l'authentification de ce dernier (circuit électrique sur lelong des parties 17 du bracelet de montre ou 18 du jonc).Le bracelet de montre et la bague peuvent se fermer ,se verrouiller par tout système de fermeture / verrouillage F et un mécanisme (non représenté) éventuellement inclus dans le composant SE peut détecter la fermeture / verrouillage et ouverture / déverrouillage du bracelet ou bague. Le mécanisme peut être un simple interrupteur notamment capacitif, électrique, optique.

Sur les figures 7, 8, la bague comprend un bouton interrupteur qui ferme le circuit en position pressé 19 quand il est introduit sur un doigt et qui se relâche et ouvre 20 le circuit SE quand il est enlevé du doigt.

Ainsi, l'accessoire une fois programmé ou initialisé, peut relayer ou représenter l'appareil de transaction dès que l'accessoire est en présence de l'utilisateur (accessoire en position de bracelet ou jonc fermé ou interrupteur de bague pressé).

Mais en cas de vol, l'accessoire est détaché de l'utilisateur, notamment par ouverture du bracelet ou anneau créant une ouverture du circuit de sécurité. Cette ouverture est détectée par un circuit de détection compris dans l'accessoire. Le circuit de détection provoque une inhibition totale ou partielle des fonctions de l'accessoire (par exemple, la fonction de transaction, de communication..). L'accessoire peut ainsi être rendu inutilisable jusqu'à la prochaine initialisation (initiation) ou réactivation à l'aide d'un appareil principal associé prévu à cet effet.

L'invention selon un autre aspect peut concerner un procédé pour réaliser une transaction électronique entre un appareil principal de communication (1, 10) et un terminal de transaction (3) dans lequel l'accessoire devient lui-même un appareil principal. En effet, l'accessoire dans ce cas peut se programmer directement par l'utilisateur ou avec un autre équipement notamment une borne de rechargement ou téléchargement d'applications de données ou d'informations, un ordinateur quelconque. L'accessoire peut aussi déléguer des droits à d'autres accessoires voire à l'appareil principal par renversement des rôles notamment en transférant une application logicielle complète, en restituant des droits ou d'unités non utilisés à un appareil principal.

Un autre système donnant lieu à des transactions peut être vu uniquement entre l'appareil principal 10 et un accessoire 12 dans lequel il peut se produire des transactions visées ci-dessus notamment de restitution, de droits, d'unité, de transfert d'application.

## Revendications

1. Procédé pour réaliser une transaction électronique entre un appareil principal ou accessoire de communication (1, 10) et un terminal de transaction (3),
**caractérisé en ce que** :
- on fournit un accessoire portable (2, 12) intelligent apte à relayer la transaction ou à représenter ledit appareil principal vis à vis d'un terminal de transaction,
- on réalise la transaction en présentant ledit accessoire au terminal de transaction à la place de l'appareil principal.

2. Procédé selon la revendication 1, **caractérisé en ce qu'**il comprend une étape d'installation d'une application bancaire (AB) dans l'appareil principal, l'accessoire relayant la transaction de manière transparente entre l'appareil principal et le terminal de transaction.

3. Procédé selon la revendication 1, **caractérisé en ce qu'**il comprend une étape d'initialisation / d'initiation de l'accessoire à l'aide de l'appareil principal ou d'appairage de l'accessoire à l'appareil principal.

4. Procédé selon la revendication 3, **caractérisé en ce que** l'étape d'initialisation / initiation comporte une phase de transfert / clonage d'informations contenues dans l'appareil à l'accessoire, lesdites informations étant choisies parmi :
- des informations d'une application de transaction électronique dans l'accessoire et/ou
- des informations (IP) comprenant un code PIN.

5. Procédé selon la revendication 3, **caractérisé en ce que** l'étape d'initialisation comporte une phase de lancement d'une application de pilotage de l'accessoire par l'appareil principal.

6. Procédé selon la revendication 5, **caractérisé en ce que** l'étape d'initialisation / initiation (A1) prévoit de capter via l'appareil principal un code PIN ou équivalent nécessaire à une transaction future et de le transmettre à l'accessoire en toute sécurité pour permettre une transaction future ou en cours.

7. Procédé selon la revendication 6, **caractérisé en ce que** l'accessoire dispose de moyens de communication (FED) configurés pour relayer des données et instructions de commande entre l'appareil principal et le terminal.

8. Procédé selon la revendication 6, **caractérisé en ce que** la transaction est autorisée par action volontaire de l'utilisateur sur un interrupteur ou authentification biométrique par l'accessoire.

9. Procédé selon l'une quelconque des revendications précédentes, **caractérisé en ce qu'**il comprend une application logicielle de contrôle (AC) de la mise en oeuvre d'une application logicielle de transaction (AB) notamment quant à une zone géographique, une période temporelle ou la manière de réaliser la transaction.

10. Procédé selon la revendication 9, **caractérisé en ce que** l'application logicielle de contrôle met en oeuvre un test comparatif de paramètres de localisation fournis notamment par GPS interne, paramètres de temps fournis notamment par une horloge interne, d'une limite de montant de transaction notamment programmé en interne, d'une identification de terminal autorisé ou prédéfinis, paramètres définissant l'objet de la transaction, lieu géographique de la transaction, paramètre d'identification de tiers contractuel intervenant dans la transaction.

11. Système (1, 10, 2, 12) pour réaliser une transaction électronique entre un appareil principal ou accessoire de communication (1, 10) et un terminal de transaction (3),
**caractérisé en ce qu'**il comprend :
- un accessoire portable (2, 12) intelligent apte à relayer la transaction ou à représenter ledit appareil principal vis à vis d'un terminal de transaction,
- des moyens de communication et d'initialisation / initiation de l'appareil principal pour initialiser / initier l'accessoire portable et des moyens de communication de l'accessoire avec un terminal e transaction pour réaliser la transaction électronique à la place de l'appareil principal.
